# EUROPÄISCHE PATENTANMELDUNG

(11) **EP 2 626 602 A2**
(43) Veröffentlichungstag der Anmeldung: **14.08.2013**
(21) Anmeldenummer: 12197409.1
(22) Anmeldetag: 17.12.2012
(51) Int. Cl.: F16J 15/32

(54) **Dichtungsanordnung**

(30) Priorität: 07.02.2012 DE 102012201751
(71) Anmelder: ROBERT BOSCH GMBH, 70442 Stuttgart (DE)
(72) Erfinder: Matthie, Daniel, 99817 Eisenach (DE); Beyersdorfer, Jan, 99819 Foertha (DE)

(57) **Zusammenfassung**

Die Erfindung betrifft eine Dichtungsanordnung (1) mit einem eine Durchgangsbohrung (22) aufweisenden Aufnahmebauteil (20), einer in die Durchgangsbohrung (22) des Aufnahmebauteils (20) axial eingebrachten Sensoreinheit (10), welches einen Flansch (14) zur Festlegung der Sensoreinheit (10) in der Durchgangsbohrung (22) aufweist, und einer elastisch verformbaren Dichtung (16), welche in einem Zwischenraum (26) zwischen dem Aufnahmebauteil (20) und der Sensoreinheit (10) angeordnet ist. Erfindungsgemäß weist die Dichtung (16) einen Querschnitt (16.1) auf, welcher eine flächige Anlage der Dichtung (16) an der Sensoreinheit (10) bewirkt.

## Beschreibung

Die Erfindung geht aus von einer Dichtungsanordnung nach der Gattung des unabhängigen Patentanspruchs 1.

### Stand der Technik

Derartige Dichtungsanordnungen sind von Sensoreinheiten bekannt, welche in Fahrzeugen zur Anwendung kommen. Die Sensoreinheiten können beispielsweise als Drehratensensoren, Drehwinkelsensoren, Drehrichtungssensoren und/oder Drehzahlsensoren zur Erfassung von Drehbewegungen an einem Fahrzeugrad und/oder im Triebstrang des Fahrzeugs eingesetzt werden.

In der Offenlegungsschrift DE 10 2008 042 645 A1 wird beispielsweise eine Dichtungsanordnung beschrieben. Die beschriebene Dichtungsanordnung umfasst ein eine Durchgangsbohrung aufweisendes Aufnahmebauteil, eine in die Durchgangsbohrung des Aufnahmebauteils axial eingebrachte Sensoreinheit, welche einen Flansch zur Festlegung der Sensoreinheit in der Durchgangsbohrung aufweist, und eine elastisch verformbare Dichtung, welche in einem Zwischenraum zwischen dem Aufnahmebauteil und der Sensoreinheit angeordnet ist. Die Dichtung ist in einer Ringnut am Außenmantel der Sensoreinheit festgelegt. Beim Einbringen der Sensoreinheit in das Aufnahmebauteil spannt sich die Dichtung gegen die Innenwandung der Durchgangsbohrung vor.

### Offenbarung der Erfindung

Die erfindungsgemäße Dichtungsanordnung mit den Merkmalen des unabhängigen Patentanspruchs 1 hat demgegenüber den Vorteil, dass die Dichtung einen Querschnitt aufweist, welcher eine flächige Anlage der Dichtung an der Sensoreinheit bewirkt. In vorteilhafter Weise kann durch die flächige Anlage der Dichtung an der Sensoreinheit im Vergleich mit herkömmlichen Ausführungsformen einer Dichtungsanordnung auf eine Nut zur Aufnahme der Dichtung verzichtet und somit die Anzahl der Bearbeitungsschritte deutlich reduziert werden. Dadurch können neben einer wesentlichen Vereinfachung und einer technischen Verbesserung der Dichtungsanordnung in vorteilhafter Weise die Herstellungskosten und die Montagekosten deutlich gesenkt werden. Die flächige Anlage der Dichtung an der Sensoreinheit führt zudem zu einer optimalen Abdichtung der beiden Bauteile gegeneinander.

Durch die in den abhängigen Ansprüchen aufgeführten Maßnahmen und Weiterbildungen sind vorteilhafte Verbesserungen der im unabhängigen Patentanspruch 1 angegebenen Dichtungsanordnung möglich.

In vorteilhafter Ausgestaltung der erfindungsgemäßen Dichtungsanordnung kann die Dichtung durch das axiale Einbringen der Sensoreinheit in die Durchgangsbohrung des Aufnahmebauteils in ihre den Zwischenraum abdichtende Endlage quer zur axialen Einbringrichtung verformbar eingepresst werden. Dadurch vergrößert sich in vorteilhafter Weise die an der Sensoreinheit anliegende Fläche der Dichtung, wodurch die Eigenschaften der Dichtung weiter verbessert werden können.

Besonders vorteilhaft ist, dass der Querschnitt der Dichtung eine ovale Form, eine D-Form oder eine viereckige Form aufweisen kann. Diese geometrischen Ausgestaltungsformen der Dichtung führen in vorteilhafter Weise bei der Montage zwangsläufig zu der gewünschten flächigen Anlage der Dichtung an der Sensoreinheit und somit zu der gewünschten optimalen Abdichtung der beiden Bauteile gegeneinander.

In weiterer vorteilhafter Ausgestaltung der erfindungsgemäßen Dichtungsanordnung kann die Dichtung ringförmig ausgeführt werden. Diese ringförmige Ausführung der Dichtung vereinfacht die Handhabung der Dichtung bei der Montage, wodurch kostenintensive Montagezeit eingespart werden kann bzw. hohe Stückzahlen bei der Fertigung von Sensoreinheiten erreicht werden können.

In weiterer vorteilhafter Ausgestaltung der erfindungsgemäßen Dichtungsanordnung kann die Dichtung vor dem Einbringen der Sensoreinheit in die Durchgangsbohrung unter Vorspannung auf die Sensoreinheit aufgebracht werden. Dadurch kann in vorteilhafter Weise ein schnelles Einbringen der Sensoreinheit in die Durchgangsbohrung des Aufnahmebauteils bei gleichzeitig optimaler Abdichtung der beiden Bauteile gegeneinander erfolgen. Die unter Vorspannung auf die Sensoreinheit aufgebrachte Dichtung verhindert in vorteilhafter Weise ein Verdrillen der Dichtung während des Einbringens der Sensoreinheit in die Durchgangsbohrung und ermöglich stets eine sichere und korrekte Einbauposition der Dichtung und damit eine reproduzierbare hohe Qualität bei minimalem Montageaufwand.

In weiterer vorteilhafter Ausgestaltung der erfindungsgemäßen Dichtungsanordnung kann die Durchgangsbohrung einen Absatz aufweisen, welcher zusammen mit einer Unterseite des Flansches der Sensoreinheit den Zwischenraum zur Aufnahme der Dichtung in axialer Richtung begrenzt. Dort erfolgt eine sichere Aufnahme der Dichtung, wobei der Absatz der Durchgangsbohrung gleichzeitig als Verliersicherung für die Dichtung über die gesamte Lebensdauer dient. Demzufolge erfüllt der Absatz der Durchgangsbohrung gleichzeitig mehrere Funktionen, wodurch zusätzliche Bauteile zur Sicherung der Dichtung eingespart werden können und eine bauraumsparende Dichtungsanordnung möglich ist. Eine bevorzugte Realisierung der erfindungsgemäßen Dichtungsanordnung sieht vor, dass der Absatz in einem Endbereich der Durchgangsbohrung vorgesehen ist.

In weiterer vorteilhafter Ausgestaltung der erfindungsgemäßen Dichtungsanordnung kann die im Zwischenraum angeordnete Dichtung im montierten Zustand der Sensoreinheit einen ersten Abstand zum Absatz der Durchgangsbohrung und/oder einen zweiten Abstand zur Unterseite des Flansches der Sensoreinheit auf weisen. Über die Abstände wird in vorteilhafter Weise erreicht, dass sich die Dichtung ungestört flächig an die Sensoreinheit anlegen kann und somit eine sichere Abdichtung der beiden Bauteile gegeneinander gewährleistet ist.

In weiterer vorteilhafter Ausgestaltung der erfindungsgemäßen Dichtungsanordnung kann die Sensoreinheit beispielsweise als Drehratensensoreinheit, Drehwinkelsensoreinheit, Drehrichtungssensoreinheit oder Drehzahlsensoreinheit ausgeführt werden.

Die Sensoreinheit kann beispielsweise zur Erfassung der Raddrehung und/oder zur Erfassung von Drehbewegungen im Triebstrang eines Fahrzeugs in einem Fahrzeug angeordnet werden.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen
Fig. 1 zeigt eine perspektivische Darstellung eines Ausführungsbeispiels einer erfindungsgemäßen Dichtungsanordnung mit einem Aufnahmebauteil und einer in das Aufnahmebauteil einbringbaren Sensoreinheit, wobei die Dichtungsanordnung nach dem Einbringen der Sensoreinheit in das Aufnahmebauteil dargestellt ist.
Fig. 2 zeigt eine Schnittdarstellung des Ausführungsbeispiels der erfindungsgemäßen Dichtungsanordnung aus Fig. 1.

### Ausführungsformen der Erfindung

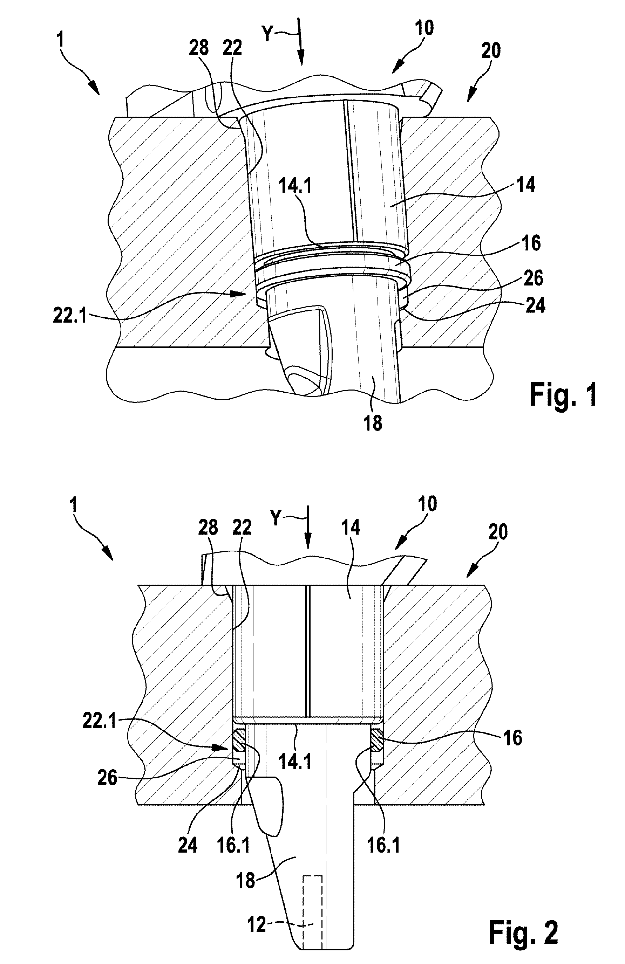

Wie aus Fig. 1 und 2 ersichtlich ist, umfasst das dargestellte Ausführungsbeispiel einer erfindungsgemäßen Dichtungsanordnung 1 ein Aufnahmebauteil 20 mit einer Durchgangsbohrung 22 und eine axial in die Durchgangsbohrung 22 des Aufnahmebauteils 20 eingebrachte Sensoreinheit 10. Vorzugsweise ist die Sensoreinheit 10 in einem nicht näher dargestellten Fahrzeug angeordnet. Im vorliegenden Ausführungsbeispiel ist die Sensoreinheit 10 als Drehratensensor, Drehwinkelsensor oder Drehzahlsensor, insbesondere zur Erfassung einer Drehzahl und/oder einer Drehrichtung einer Raddrehbewegung oder einer Drehbewegung in einem Triebstrang eines Fahrzeugs ausgeführt. Die Sensoreinheit 10 kann über ein nicht dargestelltes Anschlusskabel elektrisch kontaktiert bzw. mit einem Steuergerät oder einer Steuerschaltung elektrisch verbunden werden.

Wie aus Fig. 1 und 2 weiter ersichtlich ist, umfasst die Sensoreinheit 10 einen Sensorkern 18 mit einem Sensorelement 12 und einen Flansch 14 zur Festlegung der Sensoreinheit 10 in der Durchgangsbohrung 22 des Aufnahmebauteils 20. Vorzugsweise ist das Sensorelement 12 als Magnetfeldsensorelement ausgeführt. Zur Festlegung der Sensoreinheit 10 kann der Flansch 14 beispielsweise in die Durchgangsbohrung 22 des Aufnahmebauteils 20 eingeschraubt, eingepresst oder eingeklebt werden. Selbstverständlich sind auch weitere einem Fachmann als sinnvoll erscheinende Verfahren zur Festlegung des Flansches 14 der Sensoreinheit 10 in der Durchgangsbohrung 22 des Aufnahmebauteils 20 möglich. Um ein Einführen der Sensoreinheit 10 in die Durchgangsbohrung 22 zu erleichtern, ist im Anfangsbereich der Durchgangsbohrung 22 eine Senkung 28 vorgesehen.

Zur Abdichtung der Sensoreinheit 10 in der Durchgangsbohrung 22 des Aufnahmebauteils 20 weist die Dichtungsanordnung 1 eine elastisch verformbare Dichtung 16 auf, welche in einem Zwischenraum 26 zwischen dem Aufnahmebauteil 20 und der Sensoreinheit 10 angeordnet ist.

Im dargestellten Ausführungsbeispiel weist die Durchgangsbohrung 22 einen Absatz 24 auf, welcher zusammen mit einer Unterseite 14.1 des Flansches 14 der Sensoreinheit 10 den Zwischenraum 26 zur Aufnahme der Dichtung 16 in axialer Richtung Y begrenzt. In vorteilhafter Weise ist der Absatz 24 in einem Endbereich 22.1 der Durchgangsbohrung 22 vorgesehen. Eine bevorzugte Realisierung der erfindungsgemäßen Dichtungsanordnung sieht vor, dass der Absatz konusförmig ausgeführt ist. Im montierten Zustand der Sensoreinheit 10 weist die in dem Zwischenraum 26 angeordnete Dichtung 16 einen ersten Abstand zum Absatz 24 der Durchgangsbohrung 22 und einen zweiten Abstand zur Unterseite 14.1 des Flansches 14 der Sensoreinheit 10 auf.

Um neben einer wesentlichen Vereinfachung und einer technischen Verbesserung die Herstellungskosten und die Montagekosten der Dichtungsanordnung deutlich senken zu können, weist die Dichtung 16 erfindungsgemäß einen Querschnitt 16.1 auf, welcher eine flächige Anlage der Dichtung 16 an der Sensoreinheit 10 bewirkt. Bevorzugt weist der Querschnitt 16.1 der Dichtung 16 eine ovale Form, eine D-Form oder eine viereckige Form auf. Es sind jedoch auch andere einem Fachmann als sinnvoll erscheinende Dichtungsformen möglich, sofern diese eine flächige Anlage der Dichtung 16 an der Sensoreinheit 10 erlauben. In vorteilhafter Weise ist die Dichtung 16 ringförmig ausgeführt.

Die Dichtung 16 ist durch das axiale Einbringen der Sensoreinheit 10 in die Durchgangsbohrung 22 des Aufnahmebauteils 20 in ihre den Zwischenraum 26 abdichtende Endlage quer zur axialen Einbringrichtung Y verformbar eingepresst.

Um ein schnelles Einbringen der Sensoreinheit 10 in die Durchgangsbohrung 22 des Aufnahmebauteils 20 bei gleichzeitig optimaler Abdichtung der beiden Bauteile 10, 20 gegeneinander zu ermöglichen, wird die Dichtung 18 vor dem Einbringen der Sensoreinheit 10 in die Durchgangsbohrung 22 unter Vorspannung auf die Sensoreinheit 10 aufgebracht.

## Patentansprüche

1. Dichtungsanordnung mit einem eine Durchgangsbohrung (22) aufweisenden Aufnahmebauteil (20), einer in die Durchgangsbohrung (22) des Aufnahmebauteils (20) axial eingebrachten Sensoreinheit (10), welche einen Flansch (14) zur Festlegung der Sensoreinheit (10) in der Durchgangsbohrung (22) aufweist, und einer elastisch verformbaren Dichtung (16), welche in einem Zwischenraum (26) zwischen dem Aufnahmebauteil (20) und der Sensoreinheit (10) angeordnet ist, **dadurch gekennzeichnet, dass** die Dichtung (16) einen Querschnitt (16.1) aufweist, welcher eine flächige Anlage der Dichtung (16) an der Sensoreinheit (10) bewirkt.

2. Dichtungsanordnung nach Anspruch 1, **dadurch gekennzeichnet, dass** die Dichtung (16) durch das axiale Einbringen der Sensoreinheit (10) in die Durchgangsbohrung (22) des Aufnahmebauteils (20) in ihre den Zwischenraum (24) abdichtende Endlage quer zur axialen Einbringrichtung (Y) verformbar eingepresst ist.

3. Dichtungsanordnung nach Anspruch 1 oder 2, **dadurch gekennzeichnet, dass** der Querschnitt (16.1) der Dichtung (16) eine ovale Form, eine D-Form oder eine viereckige Form aufweist.

4. Dichtungsanordnung nach einem der Ansprüche 1 bis 3, **dadurch gekennzeichnet, dass** die Dichtung (16) ringförmig ausgeführt ist.

5. Dichtungsanordnung nach einem der Ansprüche 1 bis 4, **dadurch gekennzeichnet, dass** vor dem Einbringen der Sensoreinheit (10) in die Durchgangsbohrung (22) die Dichtung (16) unter Vorspannung auf die Sensoreinheit (10) aufgebracht ist.

6. Dichtungsanordnung nach einem der Ansprüche 1 bis 5, **dadurch gekennzeichnet, dass** die Durchgangsbohrung (22) einen Absatz (24) aufweist, welcher zusammen mit einer Unterseite (14.1) des Flansches (14) der Sensoreinheit (10) den Zwischenraum (26) zur Aufnahme der Dichtung (16) in axialer Richtung (Y) begrenzt.

7. Dichtungsanordnung nach Anspruch 6, **dadurch gekennzeichnet, dass** der Absatz (24) in einem Endbereich (22.1) der Durchgangsbohrung (20) angeordnet ist.

8. Dichtungsanordnung nach einem der Ansprüche 1 bis 7, **dadurch gekennzeichnet, dass** im montierten Zustand der Sensoreinheit (10) die in dem Zwischenraum (26) angeordnete Dichtung (16) einen ersten Abstand zum Absatz (24) der Durchgangsbohrung (22) und/oder einen zweiten Abstand zur Unterseite (14.1) des Flansches (14) der Sensoreinheit (10) aufweist.

9. Dichtungsanordnung nach einem der Ansprüche 1 bis 8, **dadurch gekennzeichnet, dass** die Sensoreinheit (10) als Drehratensensoreinheit, Drehwinkelsensoreinheit, Drehrichtungssensoreinheit oder Drehzahlsensoreinheit ausgeführt ist.

10. Dichtungsanordnung nach einem der Ansprüche 1 bis 9, **dadurch gekennzeichnet, dass** die Sensoreinheit (10) in einem Fahrzeug angeordnet ist.
